# EUROPÄISCHE PATENTSCHRIFT

(11) **EP 0 491 450 B1**
(45) Veröffentlichungstag und Bekanntmachung des Hinweises auf die Patenterteilung: **28.09.1994**
(21) Anmeldenummer: 91250317.4
(22) Anmeldetag: 19.11.1991
(51) Int. Cl.: B65G 35/06, B65G 13/04, B65G 13/08, B65G 47/54

(54) **Einrichtung zur Übergabe von auf Rollen verfahrbaren Plattformen von einem Förderer auf einen Querförderer**
Device for transferring platforms moving on rollers from one conveyor to a transverse conveyor
Dispositif de transfert de plateformes déplaçables sur rouleaux d'un transporteur vers un transporteur transversal

(30) Priorität: 17.12.1990 DE 4040795
(43) Veröffentlichungstag der Anmeldung: 24.06.1992
(73) Patentinhaber: MANNESMANN Aktiengesellschaft, 40027 Düsseldorf (DE)
(72) Erfinder: Gottstein, Norbert, W-6940 Weinheim (DE); Schäfer, Klaus, W-6100 Darmstadt (DE)
(74) Vertreter: Presting, Hans-Joachim, Dipl.-Ing.

(56) Entgegenhaltungen:
- EP-A- 0 109 459
- DE-A- 2 740 892
- GB-A- 2 137 156

## Beschreibung

Die Erfindung betrifft eine Einrichtung zur Übergabe von auf Rollen verfahrbaren Plattformen entsprechend dem Oberbegriff des Anspruchs 1.

Durch die DE-A-38 40 256 ist eine Fließfertigungsstraße mit Plattformen bekannt , auf der Personenwagen während der Montage transportiert werden. Für die Plattformen sind an den Enden der Fließfertigungsstraße Übergabestationen erforderlich, damit die Plattformen, auch Skids genannt, auf einer Parallelstrecke wieder zum Ausgangsort zurückbefördert werden können. Es sind aber auch Übergabestationen in Form von Kreuzungen denkbar, die einen Übergang in einen anderen Produktionsbereich ermöglichen. Die ortsfesten, an den Seiten der Plattformen angreifenden angetriebenen Reibräder haben sich bewährt. Der Reibradantrieb ermöglicht eine geringe Bauhöhe der Skids. Die Reibräder gestatten durch andere Anbringung auch eine Änderung der Transportstrecken, behindern an Übergabestationen aber den Transport der Plattformen, da sie für eine Transportrichtung immer störend in den anderen Förderweg hineinragen, so daß eine Hub- und Senkvorrichtung erforderlich ist.

Aufgabe der Erfindung ist es daher, eine gattungsgemäße Einrichtung so zu gestalten, daß die Reibräder auch im Bereich der Übergabestationen von einem Förderer auf einen Querförderer ohne Hub- und Senkvorrichtung einsetzbar sind. Diese Aufgabe wird mit den kennzeichnenden Merkmalen des Anspruchs 1 gelöst.

Damit das Reibrad nicht außen um die Ecke der Plattform herumgeschwenkt werden muß, wobei der Schwenkwinkel 270 Grad betragen würde, hat der Schwenkhebel an beiden Enden ein Reibrad und ist in seiner Mitte auf einer senkrechten Schwenkachse schwenkbar gelagert, wobei der Schwenkwinkel 90 Grad beträgt. Gegenüber diesen schwenkbaren Reibrädern sind an dem Förderer und dem Querförderer ortsfeste Reibräder angeordnet, die alle an einem Außenrahmen der Plattform treibend anliegen.

In weiterer Ausgestaltung der Erfindung ist auf dem Schwenkhebel ein Antriebsmotor befestigt, dessen Getriebeabtriebswelle koaxial zur Schwenkachse angeordnet ist und zwei Zahnräder für zu Zahnrädern der Reibräder führende Zahnriemen bzw. Ketten hat. Es ist somit für die beiden Reibräder einer schwenkbaren Antriebsstation nur ein Antriebsmotor erforderlich. Ebenso ist nur ein Schwenkmotor erforderlich, der über eine Kurbel und eine Schubstange an den Schwenkhebel angreift, wobei der Schwenkwinkel der Kurbel ca. 190 Grad beträgt und die Endpunkte so angeordnet sind, daß die Wirklinien von Kurbel und Schubstange eine Gerade bilden bzw. sich überdecken. Bei dieser Getriebeanordnung kann beim Erreichen der Endlage die größte Andruckkraft für das Reibrad an den Rahmen der Plattform erreicht werden, wobei die Reibräder entgegen dem Druck von Federn verschiebbar in dem Schwenkhebel gelagert sind. Damit die Plattform durch diese große Andruckkraft nicht seitwärts verschoben bzw. in Förderrichtung verkantet wird, hat sie um senkrechte Achsen drehbare Führungsrollen, die an ortsfesten Führungsschienen entlangrollen und dabei die Plattform einwandfrei führen. Es ist dann keine Führung für die Plattform tragende Rollen erforderlich, die auf dem Boden befestigt sind und nach oben gerichtete Laufflächen haben. Im Bereich der Übergabestation sind die Rollen als Kugelköpfe oder Allseitenrollen ausgebildet, wobei vor allem die Kugelköpfe in Förderrichtung der Plattform unter den Längsträgern bzw. Querträgern gegeneinander seitlich versetzt sind, damit die Kugelköpfe keinen ausgeprägten Spurrillen hinterlassen.

Zwei Ausführungsbeispiele der Erfindung sind in den Zeichnungen dargestellt und im folgenden erläutert. Es zeigen:
- Fig. 1: eine Draufsicht auf eine Übergabestation einer Förderanlage,
- Fig. 2: den Schnitt II - II durch die Fig. 1 in größerem Maßstab,
- Fig. 3: einen schwenkbaren Reibradantrieb aus Fig. 1 in größerem Maßstabe,
- Fig. 4: eine Seitenansicht aus Fig. 3 in Richtung X,
- Fig. 5: eine andere Unterstützung des Längsträgers als in Fig. 2,
- Fig. 6: eine Seitenansicht von Fig. 5.

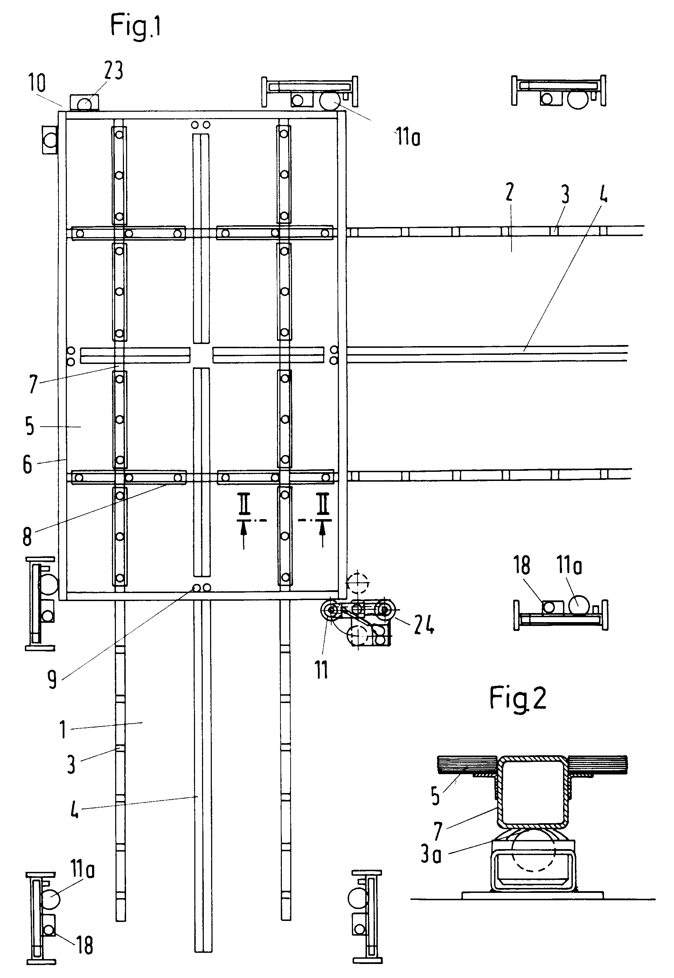

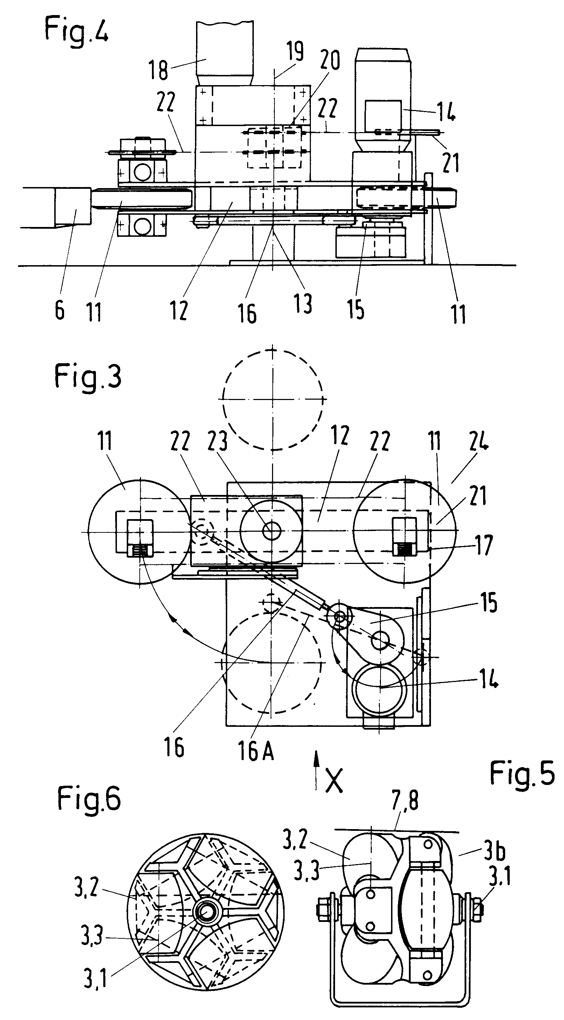

Eine Förderanlage hat im Anschluß an einen Förderer 1 eine als Eckstation ausgebildete Übergabestation 10 mit einem anschließenden Querförderer 2. Dieser und der Förderer 1 haben Rollen-Wege und Führungschienen 4 für Führungsrollen 9 der Plattformen 5, an deren Außenrahmen 6 auf beiden Seiten zum Transport der Plattformen dienende Reibräder 11 und 11A anliegen, die von Antriebsmotoren 18 angetrieben werden. Die Rollen 3 der Rollen-Wege tragen die Plattformen 5 über deren Längsträger 7 und Querträger 8. Im Bereich der Übergabestation 10 sind die Rollen 3 durch Kugelköpfe 3a ersetzt, wie die Fig. 2 zeigt. Es ist auch zu erkennen, daß die Kugelköpfe 3a unter dem Längsträger 7 gegeneinander seitlich versetzt sind, so daß dessen gesamte Unterfläche beansprucht wird und nicht nur eine einzelne Fahrspur. Anstelle dieser Kugelköpfe 3a kann die Plattform 5 auch von sog. Allseitenrollen 3b getragen werden, die in den Fig. 5 und 6 dargestellt sind. Bei Förderrichtung senkrecht zur Achse 3.1 dreht sich die gesamte Allseitenrolle 3b um diese Achse 3.1, während sich beim Quertransport die jeweils oben liegende Teilrolle 3.2 um ihre Achse 3.3 dreht. Diese Unterstützung ist zwar aufwendiger als eine Reihe von Kugelköpfen nach Fig. 2, beansprucht die Längsträger 7 und Querträger 8 aber weniger.

Im Bereich der Übergabestation 10 ist gegenüber von festen Anschlägen 23 in der Ecke zwischen der Förderbahn 1 und dem Querförderer 2 eine Reibradstation 24 angeordnet, die in den Fig. 3 und 4 in größerem Maßstab gezeichnet ist. Zwei Reibräder 11 sind an den Enden eines Schwenkhebels 12 angeordnet, der in der Mitte auf einer senkrechten Schwenkachse 13 gelagert ist und von einem Schwenkmotor 14 über eine Kurbel 15 mit einer Schubstange 16 um 90 Grad verschwenkt wird, so daß in beiden Positionen eines der Reibräder 11 am Längsträger 7 bzw. Querträger 8 anliegt. In der Position nach den Fig.1 und 3 liegt das links gezeichnete Reibrad 11 am Querträger 8 an. Diese Position ist nach dem Einfahren der Plattform 5 in die Übergabestation 10 entstanden, nachdem der Schwenkhebel 12 um 90 Grad verschwenkt wurde und dabei das rechte Reibrad 11 vom Längsträger 7 abgeschwenkt hat. Beim Verschwenken des Schwenkhebels 12 um 90 Grad wird die Kurbel 15 des Schwenkmotors 14 um ca. 190 Grad verschwenkt, wie in Fig. 3 dargestellt. Wenn das rechts bzw. oben gezeichnete Reibrad 11 am Längsträger 7 anliegt, deckt sich die Wirklinie der Kurbel 15 mit der Schubstange 16 in der Linie 16A.

Auf der Schwenkachse 13 ist ein Antriebsmotor 18 befestigt, dessen Getriebeabtriebswelle 19 senkrecht über der Schwenkachse 13 liegt und zwei übereinanderliegende Zahnräder 20 hat, von denen Zahnriemen 22 zu Zahnrädern 21 auf den Achsen der Reibräder 11 führen. Die Reibräder 11 sind entgegen dem Druck von Federn 17 in Form von Tellerfedern verschiebbar in dem Schwenkhebel 12 gelagert.

## Patentansprüche

1. Einrichtung zur Übergabe von auf Rollen verfahrbaren Plattformen von einem Förderer auf einen Querförderer, wobei die Plattformen von neben dem Förderer und dem Querförderer angeordneten, um senkrechte Achsen drehbaren, motorisch angetriebenen Reibrädern in jeweiliger Förderrichtung bewegbar sind,
dadurch gekennzeichnet,
daß ein Reibrad (11) an einem Schwenkhebel (12) gelagert ist, dessen Schwenkachse (13) in einem Winkel, der von dem Förderer (1) und dem Querförderer (2) eingeschlossen wird, außerhalb der Förderwege der Plattformen (5) angeordnet ist und dieses Reibrad (11) an die Plattformen (5) zum Transport in eine Förderrichtung treibend anlegbar ist, indem es in den Förderweg der jeweils anderen Förderrichtung bewegt wird.

2. Übergabestation nach Anspruch 1,
dadurch gekennzeichnet,
daß der Schwenkhebel (12) an beiden Enden ein Reibrad (11) hat und in seiner Mitte auf einer senkrechten Schwenkachse (13) schwenkbar gelagert ist.

3. Übergabestation nach Anspruch 2,
dadurch gekennzeichnet,
daß der Schwenkwinkel des Schwenkhebels (12) mindestens 90 Grad beträgt.

4. Übergabestation nach Anspruch 2,
dadurch gekennzeichnet,
daß an der Förderbahn (1) und dem Querförderer (2) gegenüber dem Reibrad-Paar (11) ortsfeste Reibräder (11a) angeordnet sind.

5. Übergabestation nach den Ansprüchen 1 und 4,
dadurch gekennzeichnet,
daß die Plattform (5) einen Außenrahmen (6) für die daran anliegenden Reibräder (11,11a) hat.

6. Übergabestation nach Anspruch 2,
dadurch gekennzeichnet,
daß auf dem Schwenkhebel (12) ein Antriebsmotor (18) befestigt ist, dessen Getriebeabtriebswelle (19) koaxial zur Schwenkachse (13) angeordnet ist und zwei Zahnräder (20) für zu Zahnrädern (21) der Reibräder (11) führende Zahnriemen (22) bzw. Ketten hat.

7. Übergabestation nach Anspruch 1,
dadurch gekennzeichnet,
daß an den Schwenkhebel (12) eine mit einer Kurbel (15) eines Schwenkmotors (14) verbundene Schubstange (16) angreift.

8. Übergabestation nach Anspruch 7,
dadurch gekennzeichnet,
daß der Schwenkwinkel der Kurbel (15) etwa 190 Grad beträgt und die Endpunkte so angeordnet sind, daß die Wirklinie der Kurbel (15) und der Schubstange (16) eine gerade Linie bilden bzw. sich überdecken (16A).

9. Übergabestation nach Anspruch 2,
dadurch gekennzeichnet,
daß die Reibräder (11) entgegen dem Druck von Federn (17) in Andrückrichtung an die Plattform verschiebbar in dem Schwenkhebel (12) gelagert sind.

10. Übergabestation nach Anspruch 1,
dadurch gekennzeichnet,
daß die Rollen (3) mit ihren Achsen auf dem Boden befestigt sind und nach oben gerichtete Laufflächen haben.

11. Übergabestation nach Anspruch 10,
dadurch gekennzeichnet,
daß die Rollen (3) im Bereich der Übergabestion Kugelköpfe (3a) sind.

12. Übergabestation nach Anspruch 11,
dadurch gekennzeichnet,
daß die als Kugelköpfe (3a) ausgebildeten Rollen in Förderrichtung der Plattform (5) unter dem Längsträger (7) und Querträger (8) gegeneinander seitlich versetzt sind.

13. Übergabestation nach Anspruch 10,
dadurch gekennzeichnet,
daß die Rollen im Bereich der Übergabestation Allseitenrollen (3b) sind.

14. Übergabestation nach Anspruch 1,
dadurch gekennzeichnet,
daß die Plattformen (5) mit um senkrechte Achsen drehbare Führungsrollen (9) an auf dem Boden befestigte Führungsschienen (4) geführt sind.

## Claims

1. An apparatus for the transfer of platforms displaceable on rollers from a conveyor onto a transverse conveyor, the platforms being movable in the respective conveying direction by motively driven frictional wheels arranged next to the conveyor and the transverse conveyor and rotatable about vertical axes, characterized in that one frictional wheel (11) is mounted on a swivel lever (12) whose swivel axis (13) is arranged in an angle formed by the conveyor (1) and the transverse conveyor (2) outside the conveying paths of the platforms (5) and this frictional wheel (11) may be operatively attached to the platforms (5) for transportation in a conveying direction, it being moved into the conveying path of the respective other conveying direction.

2. A transfer station according to claim 1, characterized in that the swivel lever (12) has a frictional wheel (11) at both ends and is mounted swivellably at its centre on a vertical swivel axis (13).

3. A transfer station according to claim 2, characterized in that the swivel angle of the swivel lever (12) amounts to at least 90 degrees.

4. A transfer station according to claim 2, characterized in that stationary frictional wheels (11a) are arranged on the conveying path (1) and the transverse conveyor (2) opposite the frictional wheel pair (11).

5. A transfer station according to either one of claims 1 and 4, characterized in that the platform (5) has an outer frame (6) for the frictional wheels (11, 11a) adjacent thereto.

6. A transfer station according to claim 2, characterized in that a drive motor (18) is attached to the swivel lever (12), the driven gear shaft (19) of which drive motor (18) is arranged coaxially with respect to the swivel axis (13) and has two gearwheels (20) for toothed belts (22) or chains leading to gearwheels (21) of the frictional wheels (11).

7. A transfer station according to claim 1, characterized in that a connecting rod (16) connected with a crank (15) of a swivel motor (14) acts on the swivel lever (12).

8. A transfer station according to claim 7, characterized in that the swivel angle of the crank (15) amounts to approximately 190 degrees and the end points are so arranged that the active line of the crank (15) and the connecting rod (16) form a straight line or overlap (16A) with each other.

9. A transfer station according to claim 2, characterized in that the frictional wheels (11) are mounted in the swivel lever (12) so as to be displaceable in the direction of pressure towards the platform against the pressure of springs (17).

10. A transfer station according to claim 1, characterized in that the rollers (3) are attached to the floor with their shafts and have upwardly directed running surfaces.

11. A transfer station according to claim 10, characterized in that the rollers (3) are ball heads (3a) in the area of the transfer station.

12. A transfer station according to claim 11, characterized in that the rollers constructed as ball heads (3a) are displaced towards each other laterally in the conveying direction of the platform below the longitudinal beam (7) and the cross beam (8).

13. A transfer station according to claim 10, characterized in that the rollers are universal rollers (3b) in the area of the transfer station.

14. A transfer station according to claim 1, characterized in that the platforms (5) are guided with guide rollers (9) rotatable about perpendicular axes on guide rails (4) fastened to the floor.

## Revendications

1. Dispositif pour transférer des plates-formes déplaçables sur des rouleaux d'un transporteur sur un transporteur transversal, les plates-formes pouvant être déplacées, dans la direction de transport respective, par des roues de friction entraînées de façon motorisée, pouvant tourner autour d'axes verticaux, et agencées à côté du transporteur et du transporteur transversal,
caractérisé en ce qu'une roue de friction (11) est montée sur un levier pivotant (12), dont l'axe de pivotement (13) est agencé à l'extérieur des voies de transport des plates-formes (5) sous un angle qui est défini par le transporteur (1) et le transporteur transversal (2), et cette roue de friction (11) peut être appliquée, en les entraînant, contre les plates-formes (5) pour le transport dans une direction de transport, en ce qu'elle est déplacée dans la voie de transport de l'autre direction de transport respective.

2. Poste de transfert selon la revendication 1,
caractérisé en ce que le levier pivotant (12) présente, à ses deux extrémités, une roue de friction (11) et est monté pivotant, en son centre, sur un axe de pivotement vertical (13).

3. Poste de transfert selon la revendication 2,
caractérisé en ce que l'angle de pivotement du levier (12) vaut au moins 90°.

4. Poste de transfert selon la revendication 2,
caractérisé en ce que des roues de friction (11a) stationnaires par rapport à la paire de roues de friction (11) sont agencées sur le transporteur (1) et le transporteur transversal (2).

5. Poste de transfert selon les revendications 1 et 4,
caractérisé en ce que la plate-forme (5) présente un cadre externe (6) pour les roues de friction (11,11a) adjacentes à celle-ci.

6. Poste de transfert selon la revendication 2,
caractérisé en ce que, sur le levier pivotant (12), il est fixé un moteur d'entraînement (18) dont l'arbre mené (19) est agencé coaxialement à l'axe de pivotement (13) et présente deux pignons (20) pour des courroies crantées (22) ou des chaînes menant aux pignons (21) des roues de friction (11).

7. Poste de transfert selon la revendication 1,
caractérisé en ce qu'une bielle (16) reliée à une manivelle (15) d'un moteur pivotant (14) s'engage sur le levier pivotant (12).

8. Poste de transfert selon la revendication 7,
caractérisé en ce que l'angle de pivotement de la manivelle (15) vaut environ 190° et les points d'extrémité sont agencés de sorte que les lignes d'action de la manivelle (15) et de la bielle (16) forment une ligne droite ou se recouvrent (16A).

9. Poste de transfert selon la revendication 2,
caractérisé en ce que les roues de friction (11) sont montées dans le levier pivotant (12) de façon déplaçable contre la plate-forme dans le sens de pressage à l'encontre de la pression de ressorts (17).

10. Poste de transfert selon la revendication 1,
caractérisé en ce que les rouleaux (3) sont fixés au sol par leurs axes et présentent des surfaces de roulement orientées vers le haut.

11. Poste de transfert selon la revendication 10,
caractérisé en ce que les rouleaux (3), dans la zone du poste de transfert, sont des sphères (3a).

12. Poste de transfert selon la revendication 11,
caractérisé en ce que les rouleaux, réalisés en tant que sphères (3a), sont décalés latéralement les uns par rapport aux autres dans la direction de transport de la plate-forme (5) au-dessous du support longitudinal (7) et du support transversal (8).

13. Poste de transfert selon la revendication 10,
caractérisé en ce que les rouleaux, dans la zone du poste de transfert, sont des rouleaux polydirectionnels.

14. Poste de transfert selon la revendication 1,
caractérisé en ce que les plates-formes (5) sont guidées, par des rouleaux de guidage (9) pouvant tourner autour d'axes verticaux, sur des rails de guidage (4) fixés au sol.
